# EUROPEAN PATENT SPECIFICATION

(11) **EP 4 264 709 B1**
(45) Date of publication and mention of the grant of the patent: **19.03.2025**
(21) Application number: 21798058.0
(22) Date of filing: 03.11.2021
(51) Int. Cl.: H01M 4/38, H01M 10/052, H01M 10/0569, H01M 50/414, H01M 50/417, H01M 50/42, H01M 50/423

(54) **ELECTROLYTE COMPOSITION FOR LITHIUM METAL BATTERIES**
ELEKTROLYTZUSAMMENSETZUNG FÜR LITHIUM-METALL-BATTERIEN
COMPOSITION D'ÉLECTROLYTE POUR BATTERIES AU LITHIUM MÉTAL

(30) Priority: 16.12.2020 EP 20214399
(43) Date of publication of application: 25.10.2023
(73) Proprietor: SYENSQO SA, 1130 Brussels (BE)
(72) Inventor: CHOI, Ji-Ae, 04131 Seoul (KR); TORTELLI, Vito, 20137 Milano MI (IT); MÜLLER, Guillaume, 1150 Woluwé-Saint-Pierre (BE); HOUGH, Lawrence Alan, 04194 Seoul (KR); GALIMBERTI, Marco, 20021 Bollate MI (IT); LEE, So-Young, 03766 Seoul (KR); CHOI, Hee-Sung, 04733 Seoul (KR)
(74) Representative: Kraus & Lederer PartGmbB
(86) International application number: PCT/EP2021/080434
(87) International publication number: WO 2022/128233

(56) References cited:
- WO-A1-2020/233234
- JP-A- 2010 238 510
- US-A1- 2016 344 063

## Description

### CROSS-REFERENCE TO RELATED APPLICATION

This application claims priority to European patent application No. 20214399.6 filed on December 16, 2020.

### TECHNICAL FIELD

The present invention relates to an electrolyte composition for lithium metal batteries, comprising a) at least one fluorinated di-ether containing from 4 to 10 carbon atoms, represented by Formula I of R¹-O-R²-O-R³, wherein each R¹ and R³ is independently a fluorinated alkyl group, and R² is an optionally fluorinated alkyl group, represented by Formula II of CₐF_{b}H_{c}, wherein a is an integer from 1 to 6, b+c is an integer from 2 to 10, and if b is 0, R¹ and R³ independently have no H; b) at least one non-fluorinated ether; and c) at least one lithium salt, wherein a) the fluorinated di-ether is in an amount of at least 50% by volume (vol%), based on the total volume of a) the fluorinated di-ether and b) the non-fluorinated ether. The present invention also relates to a lithium metal battery comprising a negative electrode comprising lithium metal, a positive electrode, a separator, and an electrolyte composition according to the present invention.

### BACKGROUND OF THE INVENTION

Lithium ion batteries have retained a dominant position in the market of rechargeable energy storage devices due to their many benefits comprising lightweight, reasonable energy density, and good cycle life. Nevertheless, current lithium ion batteries still suffer from relatively low energy density with respect to the required energy density, which continuously increases to meet the needs for high power applications such as electrical vehicles, hybrid electrical vehicles, grid energy storage (also called large-scale energy storage), etc.

Employing lithium metal as the negative electrode has been known since the 1970s, because of the favourable characteristics of lithium metal resulting from its low redox potential and high specific capacity. Such a lithium metal battery usually uses conventional liquid electrolytes such as a carbonate-based electrolyte and/or an ether-based electrolyte having a low viscosity and a high ionic conductivity. These liquid electrolytes decompose to make a passivation layer at the beginning of the cycles, which will result in the dendrite growth, and also further side reactions between the electrolyte and the deposited reactive lithium ions. These have been the critical issues to block the commercialization of lithium metal batteries.

The basic requirements of a suitable electrolyte for lithium metal batteries are the same as conventional liquid electrolytes for lithium ion batteries, i.e, high ionic conductivity, low melting and high boiling points, (electro)chemical stability and also safety. In addition to said basic requirements, the suitable electrolyte for lithium metal batteries should provide solutions to the drawbacks as above mentioned.

As one of diverse research efforts with a purpose to reduce or suppress the lithium dendrite formation and to improve the cycling performance of the lithium metal batteries, the use of a solid electrolyte has been considered instead of a liquid electrolyte. For example R. Sudo et al. describe in Solid State Ionics, 262, 151 (2014) the use of Al-doped Li₇La₃Zr₂O₁₂ as a solid electrolyte in an electrochemical cell comprising a Li metal as negative electrode. However, lithium dendrites were still observed.

D. Aurbach et al. in Solid State Ionics, 148, 405 (2002) and H. Ota et al. in Electrochimica Acta, 49, 565 (2004) report that additives such as CO₂, SO₂, and vinylene carbonate help in improving the stability of the passivation layer. However, these additives are consumed during the operation of the cell. Thus, they cannot be a long-term solution against the dendrite formation.

In addition, there have been various approaches with the same purpose, consisting of modifying the composition of the liquid electrolyte.

For example, the use of a liquid electrolyte with a high lithium salt concentration of LiTFSI in dimethoxyethane (DME)-1,3dioxolane (DOL) (1:1 v:v) for suppressing lithium dendrite formation has been described by L.Suo et al. in Nature Communications, DOI:10.1038/ncomms2513 (2013).

H. Wang et al. report in ChemElectroChem, 2, 1144 (2015) that a cell containing lithium metal as the negative electrode and a solvated ionic liquid of tetraglyme (G4) and LiFSI as the electrolyte exhibits excellent cycling performance.

US 2007/054186 A1 (3M Innovative Properties Company) discloses an electrolyte composition for electrochemical devices, which contains a solvent composition comprising a cyclic carbonic acid ester, such as ethylene carbonate, and at least one fluorine-containing solvent having a boiling point of at least 80°C, such as a hydrofluoroether of particular formulae, and at least one electrolyte salt, such as LiPF₆.

WO 2015/078791 A1 (Solvay Specialty Polymers Italy S.P.A.) also discloses an electrolyte formulation comprising a hydrofluoroether as an essential component of the electrolyte mixture and also a polar organic solvent, notably organic carbonates.

In particular, EP3118917 B1 (Samsung Electronics Co., Ltd.) discloses an electrolyte specific for a lithium metal battery, comprising a non-fluorine substituted ether capable of solvating lithium ions, a fluorine substituted ether, which is a glyme-based solvent with a particular formula, and a lithium salt, wherein the amount of the fluorine substituted ether is greater than an amount of the non-fluorine substituted ether. US2016/344063A1 teaches a lithium metal battery comprising a negative electrode comprising lithium metal, a positive electrode, and an electrolyte interposed between the lithium negative electrode and the positive electrode, wherein the electrolyte contains a non-fluorine substituted ether, which is capable of solvating lithium ions, a fluorine substituted ether and a lithium salt, wherein an amount of the fluorine substituted ether is greater than an amount of the non-fluorine substituted ether.

There still exists, however, the outstanding needs to provide an electrolyte for a lithium metal battery having improved cell performance including safety, while minimizing the dendrite growth and the side reactions between the liquid electrolyte and the negative electrode.

### SUMMARY OF THE INVENTION

The present invention relates to an electrolyte composition for lithium metal batteries, comprising
a) at least one fluorinated di-ether containing from 4 to 10 carbon atoms, represented by Formula I

   R¹-O-R²-O-R³ (Formula I)

   wherein each R¹ and R³ is independently a fluorinated alkyl group, and R² is an optionally fluorinated alkyl group, represented by Formula II

      CₐF_{b}H_{c} (Formula II)
   wherein a is an integer from 1 to 6, b+c is an integer from 2 to 10, and if b is 0, R¹ and R³ independently have no H;
b) at least one non-fluorinated ether; and
c) at least one lithium salt,
wherein a) the fluorinated di-ether is in an amount of at least 50% by volume (vol%), based on the total volume of a) the fluorinated di-ether and b) the non-fluorinated ether.

The present invention also relates to a lithium metal battery comprising a negative electrode comprising lithium metal, a positive electrode, a separator, and an electrolyte composition according to the present invention.

It was surprisingly found by the inventors that the above-mentioned technical problems can be solved by using an electrolyte composition for lithium metal batteries according to the present invention, which is evidenced by the excellent capacity retention and Coulombic efficiency.

### BRIEF DESCRIPTION OF DRAWINGS

Figure 1 shows cycle retention (%) of LiCoO₂/Li cells with electrolyte compositions of E1-E2 and CE1-CE4 at 3.0~4.4V (0.5C/0.5C).
Figure 2 shows cycle retention (%) of LiCoO₂/Li cells with electrolyte compositions of E1-E2 and CE5-CE9 at 3.0~4.4V (0.5C/0.5C).

### DETAILED DESCRIPTION OF THE INVENTION

### DEFINITIONS

Throughout this specification, unless the context requires otherwise, the word "comprise" or "include", or variations such as "comprises", "comprising", "includes", including" will be understood to imply the inclusion of a stated element or method step or group of elements or method steps, but not the exclusion of any other element or method step or group of elements or method steps. According to preferred embodiments, the word "comprise" and "include", and their variations mean "consist exclusively of".

As used in this specification, the singular forms "a", "an" and "the" include plural aspects unless the context clearly dictates otherwise. The term "and/or" includes the meanings "and", "or" and also all the other possible combinations of the elements connected to this term.

The term "between" should be understood as being inclusive of the limits.

As used herein, the terminology "(Cₙ-Cₘ)" in reference to an organic group, wherein n and m are integers, respectively, indicates that the group may contain from n carbon atoms to m carbon atoms per group.

The term "aliphatic group" includes organic moieties characterized by straight or branched-chains, typically having between 1 and 18 carbon atoms. In complex structures, the chains may be branched, bridged, or cross-linked. Aliphatic groups include alkyl groups, alkenyl groups, and alkynyl groups.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a temperature range of about 120°C to about 150°C should be interpreted to include not only the explicitly recited limits of about 120°C to about 150°C, but also to include sub-ranges, such as 125°C to 145°C, 130°C to 150°C, and so forth, as well as individual amounts, including fractional amounts, within the specified ranges, such as 122.2°C, 140.6°C, and 141.3°C.

As used herein, the molar concentration or the molarity is a measure of the concentration of a chemical species, in particular of a solute in a solution, in terms of the amount of substance per unit volume of solution. The most commonly used unit for molarity is the number of moles per liter, having the unit of mol/L. A solution with a concentration of 1 mol/L is indicated as 1 molar and designated as 1 M.

Unless otherwise specified, in the context of the present invention the amount of a component in a composition is indicated as the ratio between the volume of the component and the total volume of the composition multiplied by 100, i.e., % by volume (vol%) or as the ratio between the weight of the component and the total weight of the composition multiplied by 100, i.e., % by weight (wt%).

In the present invention, the term "Coulombic efficiency", also known as Faraday efficiency, is intended to denote the charge efficiency by which electrons are transferred in a system facilitating an electrochemical reaction, i.e., batteries and it corresponds to the ratio of the total charge extracted from the battery to the total charge put into the battery over a full cycle. In addition, the Coulombic efficiency (%) is calculated by dividing the discharge capacity of each cycle by the charge capacity of each cycle, multiplied by 100.

As used herein, the term "lithium metal batteries" is intended to denote secondary (rechargeable) batteries that have metallic lithium as an anode.

It is to be understood that both the foregoing general description and the following detailed description are exemplary and are intended to provide further explanation of the invention as claimed. Accordingly, various changes and modifications described herein will be apparent to those skilled in the art. Moreover, descriptions of well-known functions and constructions may be omitted for clarity and conciseness.

The present invention relates to an electrolyte composition for lithium metal batteries, comprising:
a) at least one fluorinated di-ether containing from 4 to 10 carbon atoms, represented by Formula I

   R¹-O-R²-O-R³ (Formula I)

   wherein each R¹ and R³ is independently a fluorinated alkyl group, and R² is an optionally fluorinated alkyl group, represented by Formula II

      CₐF_{b}H_{c} (Formula II)
   wherein a is an integer from 1 to 6, b+c is an integer from 2 to 10, and if b is 0, R¹ and R³ independently have no H;
b) at least one non-fluorinated ether; and
c) at least one lithium salt,
wherein a) the fluorinated di-ether is in an amount of at least 50% by volume (vol%), based on the total volume of a) the fluorinated di-ether and b) the non-fluorinated ether.

In one embodiment, the fluorinated alkyl group is a saturated and straight-chain hydrocarbon, which is fluorinated.

In another embodiment, the fluorinated alkyl group is a saturated and cyclic hydrocarbon, which is fluorinated.

In one embodiment, a) the fluorinated di-ether contains from 5 to 8 carbon atoms, preferably 6 carbon atoms.

In one embodiment, the electrolyte composition for lithium metal batteries according to the present invention comprises:
a) at least one fluorinated di-ether containing from 5 to 8 carbon atoms, represented by Formula I'

   R^{1'}-O-R^{2'}-O-R^{3'} (Formula I')

   wherein each R^{1'} and R^{3'} is independently a fluorinated alkyl group, and R^{2'} is an optionally fluorinated alkyl group, represented by Formula II'

      C_{a'}F_{b'}H_{c'} (Formula II')
   wherein a' is an integer from 1 to 4, b'+c' is an integer from 2 to 8, and if b' is 0, R^{1'} and R^{3'} independently have no H;
b) at least one non-fluorinated ether; and
c) at least one lithium salt,
wherein a) the fluorinated di-ether is in an amount of at least 50 vol%, based on the total volume of a) the fluorinated di-ether and b) the non-fluorinated ether.

In one embodiment, the electrolyte composition according to the present invention comprises
- from 60 to 90 vol% of a) the fluorinated di-ether; and
- from 10 to 40 vol% of b) the non-fluorinated ether, based on the total volume of a) the fluorinated di-ether and b) the non-fluorinated ether.

In another embodiment, the electrolyte according to the present invention comprises
- from 80 to 90 vol% of a) the fluorinated di-ether; and
- from 10 to 20 vol% of b) the non-fluorinated ether, based on the total volume of a) the fluorinated di-ether and b) the non-fluorinated ether.

In one particular embodiment, the electrolyte composition for lithium metal batteries according to the present invention comprises:
- 80 vol% of a) the fluorinated di-ether containing 6 carbon atoms;
- 20 vol% of b) the non-fluorinated ether, based on the total volume of a) the fluorinated di-ether and b) the non-fluorinated ether; and
- 1 M of LiFSI dissolved in the mixture of a) the fluorinated di-ether and b) the non-fluorinated ether.

In the present invention, the term "alkyl" is intended to denote saturated hydrocarbons having one or more carbon atoms, including straight-chain alkyl groups, such as methyl, ethyl, propyl, butyl, pentyl, hexyl, heptyl, octyl, cyclic alkyl groups (or "cycloalkyl" or "alicyclic"), such as cyclopropyl, cyclopentyl, cyclohexyl,etc.

In the present invention, the term "fluorinated di-ether" is intended to denote a di-ether compound, wherein at least one hydrogen atom is replaced by fluorine. One, two, three or a higher number of hydrogen atoms may be replaced by fluorine.

In the present invention, the term "boiling point" is intended to denote the temperature at which the vapour pressure of a liquid substance equals the pressure surrounding the liquid and the liquid changes its physical status into a vapour. The boiling point of a liquid substance varies depending on the surrounding environmental pressure and the boiling point according to the invention corresponds to the boiling point when the liquid is at atmospheric pressure, also known as the atmospheric boiling point.

In one embodiment, the boiling point of a) the fluorinated di-ether is at least 80°C, preferably from 80°C to 160°C.

In one embodiment, the molar ratio F/H in a) the fluorinated di-ether is from 2.0 to 11.0, preferably from 2.5 to 8.0, and more preferably from 2.5 to 6.0.

In one embodiment, a) the fluorinated di-ether contains 5 carbon atoms.

In a preferred embodiment, a) the fluorinated di-ether is a mixture comprising C₅F₉H₃O₂ in an amount of at least 50 wt%, based on the total weight of a) the fluorinated di-ether.

In another preferred embodiment, a) the fluorinated di-ether is a mixture comprising C₅F₁₀H₂O₂ in an amount of at least 50 wt%, based on the total weight of a) the fluorinated di-ether.

In another preferred embodiment, a) the fluorinated di-ether is a mixture comprising C₅F₁₁H₁O₂ in an amount of at least 50 wt%, based on the total weight of a) the fluorinated di-ether.

In another embodiment, a) the fluorinated di-ether contains 6 carbon atoms.

In a preferred embodiment, a) the fluorinated di-ether is a mixture comprising C₆F₁₀H₄O₂ in an amount of at least 50 wt%, preferably at least 70 wt%, based on the total weight of a) the fluorinated di-ether.

In a preferred embodiment, a) the fluorinated di-ether is a mixture comprising C₆F₁₁H₃O₂ in an amount of at least 50 wt%, based on the total weight of a) the fluorinated di-ether.

In a preferred embodiment, a) the fluorinated di-ether is a mixture comprising C₆F₁₂H₂O₂ in an amount of at least 50 wt%, based on the total weight of a) the fluorinated di-ether.

In another embodiment, a) the fluorinated di-ether contains 7 carbon atoms.

In a preferred embodiment, a) the fluorinated di-ether is a mixture comprising C₇F₁₂H₄O₂ in an amount of at least 50 wt%, preferably at least 70 wt%, based on the total weight of a) the fluorinated di-ether.

In a preferred embodiment, a) the fluorinated di-ether is a mixture comprising C₇F₁₄H₂O₂ in an amount of at least 50 wt%, based on the total weight of a) the fluorinated di-ether.

In another embodiment, a) the fluorinated di-ether contains 8 carbon atoms.

In a preferred embodiment, a) the fluorinated di-ether is a mixture comprising C₈F₁₂H₆O₂ in an amount of at least 50 wt%, preferably at least 70 wt%, and more preferably at least 80 wt%, based on the total weight of a) the fluorinated di-ether.

In a preferred embodiment, a) the fluorinated di-ether is a mixture comprising C₈F₁₄H₄O₂ in an amount of at least 50 wt%, based on the total weight of a) the fluorinated di-ether.

In a preferred embodiment, a) the fluorinated di-ether is a mixture comprising C₈F₁₆H₂O₂ in an amount of at least 50% by weight (wt%), based on the total weight of a) the fluorinated di-ether.

Non-limitative examples of suitable a) fluorinated di-ether according to the present invention include, notably, the followings:
CF₃CH₂-O-CF₂CHF-O-CF₃, CHF₂CH₂-O-CF₂CF₂-O-CF₃, CF₃CF₂-O-CHFCHF-O-CHF₂, CHF₂CF₂-O-CHFCHF-O-CF₃, CF₃CHF-O-CHFCF₂-O-CHF₂, CF₃CHF-O-CF₂CHF-O-CHF₂, CH₃CF₂-O-CF₂-O-CF₂CF₃, CFH₂CHF-O-CF₂-O-CF₂CF₃, CF₃CF₂-O-CHF-O-CHFCHF₂, CF₃CF₂-O-CHF-O-CHFCHF₂, CF₃CH₂-O-CF₂CF₂-O-CF₃, CHF₂CHF-O-CF₂CF₂-O-CF₃, CH₂FCF₂-O-CF₂CF₂-O-CF₃, CF₃CF₂-O-CHFCHF-O-CF₃, CF₃CF₂-O-CF₂CH₂-O-CF₃, CF₃CF₂-O-CH₂CF₂-O-CF₃, CF₃CF₂-O-CF₂CFH-O-CHF₂, CF₃CHF-O-CHFCF₂-O-CF₃, CF₃CHF-O-CF₂CHF-O-CF₃, CHF₂CF₂-O-CF₂CHF-O-CF₃, CHF₂CF₂-O-CHFCF₂-O-CF₃, CHF₂CF₂-O-CF₂CF₂-O-CHF₂, CF₃CHF-O-CF₂CF₂-O-CHF₂, CF₃CF₂-O-CF₂-O-CHFCF₃, CF₂HCF₂-O-CF₂-O-CF₂CF₃, CF₃CHF-O-CF₂-O-CF₂CF₃, CF₃CF₂-O-CHF-O-CF₂CF₃, CF₃CF₂-O-CF₂-O-CF₂CHF₂, CF₂HCF₂-O-CF₂CH₂-O-CF₂CF₂H, CF₃CF₂-O-CH₂CH₂-O-CF₂CF₃, CF₂HCF₂-O-CHFCHF-O-CF₂CF₂H, CF₃CF₂-O-CHFCH₂-O-CF₂CF₂H, CF₂HCF₂-O-CHFCHF-O-CF₂CF₂H, CF₃CF₂-O-CH₂CHF-O-CF₂CF₂H, CF₃-O-CHFCF₂CH₂-O-CF₂CF₂H, CF₂HCF₂-O-CF₂CF₂-O-CF₂CF₂H, CF₃CF₂-O-CF₂CHF-O-CF₂CF₂H, CF₃CF₂-O-CHFCF₂-O-CF₂CF₂H, CF₃CF₂-O-CF₂CH₂-O-CF₂CF₃, CF₃CF₂-O-CHFCHF-O-CF₂CF₃, CF₃CF₂-O-CHFCHF-O-CF₂CF₃, and mixtures thereof.

In the present invention, the term "non-fluorinated ether" is intended to denote an ether compound, wherein no fluorine atom is present.

Non-limitative examples of suitable b) non-fluorinated ether according to the present invention include, notably, the followings:
- aliphatic, cycloaliphatic or aromatic ether, more particularly, dibutyl ether, dipentyl ether, diisopentyl ether, dimethoxyethane (DME), 1,3-dioxolane (DOL), tetrahydrofuran (THF), 2-methyltetrahydrofuran, and diphenyl ether;
- glycol ethers, such as ethylene glycol monomethyl ether, ethylene glycol monoethyl ether, ethylene glycol monopropyl ether, ethylene glycol monoisopropyl ether, ethylene glycol monobutyl ether, ethylene glycol monophenyl ether, ethylene glycol monobenzyl ether, diethylene glycol monomethyl ether, diethylene glycol monoethyl ether, diethylene glycol mono-n-butyl ether, ethylene glycol dimethyl ether, diethylene glycol dimethyl ether (DEGDME), ethylene glycol diethyl ether, diethylene glycol diethyl ether (DEGDEE), tetraethylene glycol dimethyl ether (TEGME), polyethylene glycol dimethyl ether (PEGDME);

- glycol ether esters, such as ethylene glycol methyl ether acetate, ethylene glycol monoethyl ether acetate, ethylene glycol monobutyl ether acetate; and
- trialkyl phosphate, such as trimethylphosphate and triethylphosphate (TEP).

In a preferred embodiment, b) the non-fluorinated ether compound according to the present invention comprises dimethoxyethane (DME), 1,3-dioxolane (DOL), dibutyl ether, tetraethylene glycol dimethyl ether (TEGME), diethylene glycol dimethyl ether (DEGDME), diethylene glycol diethyl ether (DEGDEE), polyethylene glycol dimethyl ether (PEGDME), 2-methyltetrahydrofuran, tetrahydrofuran (THF), triethylphosphate (TEP), and mixtures thereof.

In a more preferred embodiment, b) the non-fluorinated ether is a mixture of DME and DOL.

In another more preferred embodiment, b) the non-fluorinated ether is DME.

The lithium salt is described as a lithium ion complex such as lithium hexafluorophosphate (LiPF₆), lithium perchlorate (LiClO₄), lithium hexafluoroarsenate (LiAsF₆), lithium hexafluoroantimonate (LiSbF₆), lithium hexafluorotantalate (LiTaF₆), lithium tetrachloroaluminate (LiAlCl₄), lithium tetrafluoroborate (LiBF₄), lithium chloroborate (Li₂B₁₀Cl₁₀), lithium fluoroborate (Li₂B₁₀F₁₀), Li₂B₁₂FₓH₁₂₋ₓ wherein x=0-12, LiPFₓ(R_{F})₆₋ₓ and LiBF_{y}(R_{F})_{4-y} wherein R_{F} represents perfluorinated C₁-C₂₀ alkyl groups or perfluorinated aromatic groups, x=0-5 and y=0-3, LiBF₂[O₂C(CX₂)ₙCO₂], LiPF₂[O₂C(CX₂)ₙCO₂]₂, LiPF₄[O₂C(CX₂)ₙCO₂] wherein X is selected from the group consisting of H, F, Cl, C₁-C₄ alkyl groups and fluorinated alkyl groups, and n=0-4, lithium trifluoromethane sulfonate (LiCF₃SO₃), lithium bis(fluorosulfonyl)imide Li(FSO₂)₂N (LiFSI), LiN(SO₂CₘF₂ₘ₊₁)(SO₂CₙF₂ₙ₊₁) and LiC(SO₂CₖF₂ₖ₊₁)(SO₂CₘF₂ₘ₊₁)(SO₂CₙF₂ₙ₊₁) wherein k=1-10, m=1-10 and n=1-10, LiN(SO₂CₚF₂ₚSO₂) and LiC(SO₂CₚF₂ₚSO₂)(SO₂C_{q}F_{2q+1}) wherein p=1-10 and q=1-10, lithium salts of chelated orthoborates and chelated orthophosphates such as lithium bis(oxalato)borate [LiB(C₂O₄)₂], lithium bis(malonato)borate [LiB(O₂CCH₂CO₂)₂], lithium bis(difluoromalonato) borate [LiB(O₂CCF₂CO₂)₂], lithium (malonatooxalato) borate [LiB(C₂O₄)(O₂CCH₂CO₂)], lithium (difluoromalonatooxalato) borate [LiB(C₂O₄)(O₂CCF₂CO₂)], lithium tris(oxalato) phosphate [LiP(C₂O₄)₃], lithium tris(difluoromalonato) phosphate [LiP(O₂CCF₂CO₂)₃], lithium difluorophosphate (LiPO₂F₂), lithium 2-trifluoromethyl-4,5-dicyanoimidazole (LiTDI), and mixtures thereof.

The preferred lithium salts are LiPF₆, LiTFSI, and LiFSI, which may be used alone or in combination.

In one embodiment, c) the lithium salt is LiPF₆.

In another embodiment, c) the lithium salt is LiFSI.

In one embodiment, a molar concentration (M) of the lithium salt in the electrolyte composition according to the present invention is from 1 M to 8 M, preferably from 1 M to 4 M, and more preferably from 1 M to 2 M.

According to one embodiment, the electrolyte composition according to the present invention further comprises d) at least one fluorinated organic carbonate compound.

Non-limiting examples of d) the fluorinated organic carbonate compound comprise 4-fluoroethylene carbonate, 4,5-difluoro-1,3-dioxolan-2-one, 4,5-difluoro-4-methyl-1,3-dioxolan-2-one, 4,5-difluoro-4,5-dimethyl-1,3-dioxolan-2-one, 4,4-difluoro-1,3-dioxolan-2-one, 4,4,5-trifluoro-1,3-dioxolan-2-one, tetrafluoroethylene carbonate, 2,2,3,3-tetrafluoropropyl methyl carbonate, bis(2,2,3,3-tetrafluoropropyl) carbonate, bis(2,2,2-trifluoroethyl) carbonate, 2,2,2-trifluoroethylmethyl carbonate, bis(2,2-difluoroethyl) carbonate, 2,2-difluoroethylmethyl carbonate, 1-fluoroethylmethyl carbonate, 1-fluoroethylpropyl carbonate, 1-fluoroethylethyl carbonate, 1-fluoroethylphenyl carbonate, 1-fluoroethyl-2,2,2-trifluoroethyl carbonate, allyl-1-fluoroethyl carbonate, fluoromethylmethyl carbonate, 2-cyanoethyl-1-fluoroethyl carbonate, 1-fluoroethylpropagyl carbonate, 4-(2,2-difluoroethoxy)ethylene carbonate, 4-(2,2,2-trifluoroethoxy)ethylene carbonate, ethyl fluoro(phenyl)methyl carbonate, tris(trifluoroethyl)phosphate, methyl-3,3,3-trifluoropropanonate, 3-((2-oxo-1,3-dioxolan-4-yl)oxy)propanenitrile, 2,2-difluoroethyl methyl carbonate, 2,2-difluoroethyl acetate, 2,2-difluoroethyl methyl carbonate, 2,2-difluoroethyl propionate, and mixtures thereof.

In the present invention, the total amount of the d) at least one fluorinated organic carbonate compound may be from 0 to 50 wt%, preferably from 0 to 40 wt%, and more preferably from 0 to 30 wt% with respect to the total weight of the electrolyte.

The total amount of the d) at least one fluorinated organic carbonate compound, if contained in the electrolyte composition of the present invention, is from 5 to 50.0 wt%, preferably from 10 to 40 wt%, and more preferably from 20 to 30 wt% with respect to the total weight of the electrolyte composition.

According to one embodiment, the electrolyte composition according to the present invention further comprises e) at least one film-forming additive, which promotes the formation of the solid electrolyte interface (SEI) layer at the negative electrode surface by reacting in advance of the solvents on the electrode surfaces. For the SEI layer, the main components hence comprise the decomposed products of electrolyte solvents and salts, which may include Li₂CO₃ (in case of LiCoO₂ as a positive electrode), lithium alkyl carbonate, lithium alkyl oxide and other salt moieties such as LiF for LiPF₆-based electrolytes. According to another embodiment, e) the film-forming additive stabilizes the cathode electrolyte interface (CEI) layer at the positive electrode surface by preventing the structural change of the positive electrode, notably under high voltage. Usually, the reduction potential of the film-forming additive is higher than that of the solvent when a reaction occurs at the negative electrode surface, and the oxidation potential of the film-forming additive is lower than that of the solvent when the reaction occurs at the positive electrode side.

In one embodiment, e) the film-forming additive according to the present invention is selected from the group consisting of cyclic sulfite and sulfate compounds comprising 1,3-propanesultone (PS), ethylene sulfite (ES) and prop-1-ene-1,3-sultone (PES); sulfone derivatives comprising dimethyl sulfone, tetramethylene sulfone (also known as sulfolane), ethyl methyl sulfone and isopropyl methyl sulfone; nitrile derivatives comprising succinonitrile, adiponitrile, glutaronitrile, and 4,4,4-trifluoronitrile; lithium nitrate (LiNO₃); boron derivatives salt comprising lithium difluoro oxalato borate (LiDFOB), lithium fluoromalonato (difluoro)borate (LiFMDFB), vinyl acetate, biphenyl benzene, isopropyl benzene, hexafluorobenzene, tris(trimethylsilyl)phosphate, triphenyl phosphine, ethyl diphenylphosphinite, triethyl phosphite, tris(2,2,2-trifluoroethyl) phosphite, maleic anhydride, vinylene carbonate, vinyl ethylene carbonate, cesium bis(triflulorosulfonyl)imide (CsTFSI), cesium hexafluorophosphate (CsPF₆), cesium fluoride (CsF), trimethylboroxine (TMB), tributyl borate (TBB), 2-(2,2,3,3,3-pentafluoropropoxy)-1,3,2-dioxaphospholane (PFPOEPi), 2-(2,2,3,3,3-pentafluoropropoxy)-4-(trifluormethyl)-1,3,2-dioxaphospholane (PFPOEPi-1CF₃), lithium hexafluorophosphate (LiPF₆), silver nitrate (AgNO₃), silver hexafluorophosphate (AgPF₆), tris(trimethylsilyl)phosphine (TMSP), 1,6-divinylperfluorohexane, and mixtures thereof.

In one preferred embodiment, e) the film-forming additive according to the present invention is vinylene carbonate.

In another embodiment, e) the film-forming additive according to the present invention is an ionic liquid.

The term "ionic liquid" as used herein refers to a compound comprising a positively charged cation and a negatively charged anion, which is in the liquid state at the temperature of 100°C or less under atmospheric pressure. While ordinary liquids such as water are predominantly made of electrically neutral molecules, ionic liquids are largely made of ions and short-lived ion pairs. As used herein, the term "ionic liquid" indicates a compound free from solvent.

The term "onium cation" as used herein refers to a positively charged ion having at least part of its charge localized on at least one non-metal atom such as O, N, S, or P.

In the present invention, the ionic liquid has a general formula of Aⁿ⁻Q^{l+}_{(n/l)}, wherein
- Aⁿ⁻ represents an anion;
- Q^{l+}_{(n/l)} represents a cation;
- n and l, independently selected between 1 and 5, represent respectively the charges of the anion Aⁿ⁻ and of the cation Q^{l+}(_{n/l}).

The cation(s) may be selected, independently of one another, from metal cations and organic cations. The cation(s) may be mono-charged cations or polycharged cations.

As metal cation, mention may preferably be made of alkali metal cations, alkaline-earth metal cations and cations of d-block elements.

In the present invention, Q^{l+}_{(n/l)} may represent an onium cation. Onium cations are cations formed by the elements of Groups VB and VIB (as defined by the old European IUPAC system according to the Periodic Table of the Elements) with three or four hydrocarbon chains. The Group VB comprises the N, P, As, Sb and Bi atoms. The Group VIB comprises the O, S, Se, Te and Po atoms. The onium cation can in particular be a cation formed by an atom selected from the group consisting of N, P, O and S, more preferably N and P, with three or four hydrocarbon chains.

The onium cation Q^{l+}_{(n/l)} can be selected from:
- heterocyclic onium cations; in particular those selected from the group consisting of: 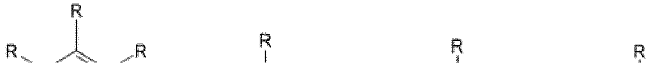 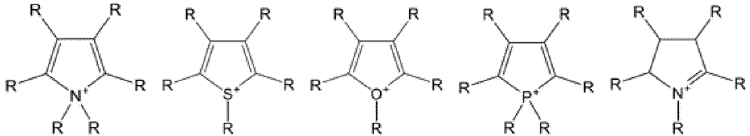 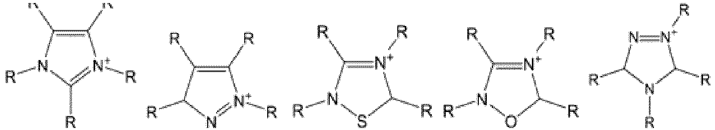
- unsaturated cyclic onium cations; in particular those selected from the group consisting of:
- saturated cyclic onium cations; in particular those selected from the group consisting of: 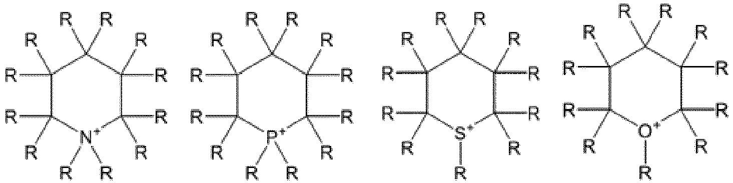 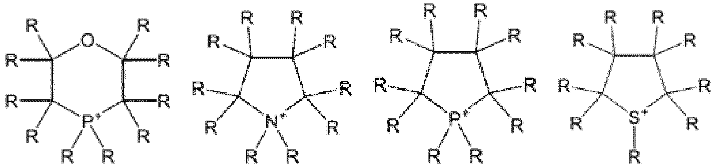 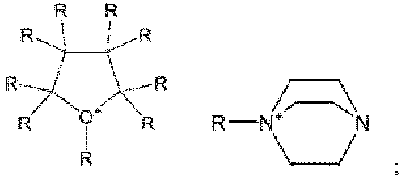 and
- non-cyclic onium cations; in particular those of general formula ⁺L-R'ₛ, in which L represents an atom selected from the group consisting of N, P, O and S, more preferably N and P, s represents the number of R' groups selected from 2, 3 or 4 according to the valence of the element L, each R' independently represents a hydrogen atom or a C₁ to C₈ alkyl group, and the bond between L⁺ and R' can be a single bond or a double bond.

In the above formulas, each "R" symbol represents, independently of one another, a hydrogen atom or an organic group. Preferably, each "R" symbol can represent, in the above formulas, independently of one another, a hydrogen atom or a saturated or unsaturated and linear, branched or cyclic C₁ to C₁₈ hydrocarbon group optionally substituted one or more times by a halogen atom, an amino group, an imino group, an amide group, an ether group, an ester group, a hydroxyl group, a carboxyl group, a carbamoyl group, a cyano group, a sulfone group or a sulfite group.

The cation Q^{l+}_{(n/l)} can more particularly be selected from ammonium, phosphonium, pyridinium, pyrrolidinium, pyrazolinium, imidazolium, arsenium, quaternary phosphonium and quaternary ammonium cations.

The quaternary phosphonium or quaternary ammonium cations can more preferably be selected from tetraalkylammonium or tetraalkylphosphonium cations, trialkylbenzylammonium or trialkylbenzylphosphonium cations or tetraarylammonium or tetraarylphosphonium cations, the alkyl groups of which, either identical or different, represent a linear or branched alkyl chain having from 4 to 12 carbon atoms, preferably from 4 to 6 carbon atoms, and the aryl groups of which, either identical or different, represents a phenyl or naphthyl group.

In a specific embodiment, Q^{l+}_{(n/l)} represents a quaternary phosphonium or quaternary ammonium cation.

In one preferred embodiment, Q^{l+}_{(n/l)} represents a quaternary phosphonium cation. Non-limiting examples of the quaternary phosphonium cation comprise trihexyl(tetradecyl)phosphonium, and a tetraalkylphosphonium cation, particularly the tetrabutylphosphonium (PBu₄) cation.

In another embodiment, Q^{l+}_{(n/l)} represents an imidazolium cation. Non-limiting examples of the imidazolium cation comprise 1,3-dimethylimidazolium, 1-(4-sulfobutyl)-3-methyl imidazolium, 1-allyl-3H-imidazolium, 1-butyl-3-methylimidazolium, 1-ethyl-3-methylimidazolium, 1-hexyl-3-methylimidazolium, 1-octyl-3-methylimidazolium

In another embodiment, Q^{l+}_{(n/l)} represents a quaternary ammonium cation which is selected in particular from the group consisting of tetraethylammonium, tetrapropylammonium, tetrabutylammonium, trimethylbenzylammonium, methyltributylammonium, N,N-diethyl-N-methyl-N-(2-methoxyethyl) ammonium, N,N-dimethyl-N-ethyl-N-(3-methoxypropyl) ammonium, N,N-dimethyl-N-ethyl-N-benzyl ammonium, N, N-dimethyl-N-ethyl-N-phenylethyl ammonium, N-tributyl-N-methyl ammonium, N-trimethyl-N-butyl ammonium, N-trimethyl-N-hexyl ammonium, N-trimethyl-N-propyl ammonium, and Aliquat 336 (mixture of methyltri(C₈ to C₁₀ alkyl)ammonium compounds).

In one embodiment, Q^{l+}_{(n/l)} represents a piperidinium cation, in particular N-butyl-N-methyl piperidinium, N-propyl-N-methyl piperidinium.

In another embodiment, Q^{l+}_{(n/l)} represents a pyridinium cation, in particular N-methylpyridinium.

In a more preferred embodiment, Q^{l+}_{(n/l)} represents a pyrrolidinium cation. Among specific pyrrolidinium cations, mention may be made of the following : C₁₋₁₂alkyl-C₁₋₁₂alkyl-pyrrolidinium, and more preferably C₁₋₄alkyl-C₁₋₄alkyl-pyrrolidinium. Examples of pyrrolidinium cations comprise, but not limited to, N,N-dimethylpyrrolidinium, N-ethyl-N-methylpyrrolidinium, N-isopropyl-N-methylpyrrolidinium, N-methyl-N-propylpyrrolidinium, N-butyl-N-methylpyrrolidinium, N-octyl-N-methylpyrrolidinium, N-benzyl-N-methylpyrrolidinium, N-cyclohexylmethyl-N-methylpyrrolidinium, N-[(2-hydroxy)ethyl]-N-methylpyrrolidinium. More preferred are N-methyl-N-propylpyrrolidinium (PYR13) and N-butyl-N-methylpyrrolidinium (PYR14).

Non-limiting examples of an anion of the ionic liquid comprise iodide, bromide, chloride, hydrogen sulfate, dicyanamide, acetate, diethyl phosphate, methyl phosphonate, fluorinated anion, e.g., hexafluorophosphate (PF₆⁻) and tetrafluoroborate (BF₄⁻), and oxalatooborate of the following formula:

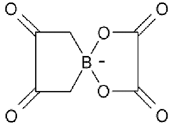

In one embodiment, Aⁿ⁻ is a fluorinated anion. Among the fluorinated anions that can be used in the present invention, fluorinated sulfonimide anions may be particularly advantageous. The organic anion may, in particular, be selected from the anions having the following general formula:

(Eₐ-SO₂)N⁻ R

in which:
- Eₐ represents a fluorine atom or a group having preferably from 1 to 10 carbon atoms, selected from fluoroalkyls, perfluoroalkyls and fluoroalkenyls, and
- R represents a substituent.

Preferably, Eₐ may represent For CF₃.

According to a first embodiment, R represents a hydrogen atom.

According to a second embodiment, R represents a linear or branched, cyclic or non-cyclic hydrocarbon-based group, preferably having from 1 to 10 carbon atoms, which can optionally bear one or more unsaturations, and which is optionally substituted one or more times with a halogen atom, a nitrile function, or an alkyl group optionally substituted one of several times by a halogen atom. Moreover, R may represent a nitrile group -CN.

According to a third embodiment, R represents a sulfinate group. In particular, R may represent the group -SO₂-Eₐ, Eₐ being as defined above. In this case, the fluorinated anion may be symmetrical, i.e. such that the two Eₐ groups of the anion are identical, or non-symmetrical, i.e. such that the two Eₐ groups of the anion are different.

Moreover, R may represent the group -SO₂-R', R' representing a linear or branched, cyclic or non-cyclic hydrocarbon-based group, preferably having from 1 to 10 carbon atoms, which can optionally bear one or more unsaturations, and which is optionally substituted one or more times with a halogen atom, a nitrile function, or an alkyl group optionally substituted one of several times by a halogen atom. In particular, R' may comprise a vinyl or allyl group. Furthermore, R may represent the group -SO₂-N-R', R' being as defined above or else R' represents a sulfonate function -SO₃.

Cyclic hydrocarbon-based groups may preferably refer to a cycloalkyl group or to an aryl group. "Cycloalkyl" refers to a monocyclic hydrocarbon chain, having 3 to 8 carbon atoms. Preferred examples of cycloalkyl groups are cyclopentyl and cyclohexyl. "Aryl" refers to a monocyclic or polycyclic aromatic hydrocarbon group, having 6 to 20 carbon atoms. Preferred examples of aryl groups are phenyl and naphthyl. When a group is a polycyclic group, the rings may be condensed or attached by σ (sigma) bonds.

According to a fourth embodiment, R represents a carbonyl group. R may, in particular, be represented by the formula -CO-R', R' being as defined above.

The organic anion that can be used in the present invention may advantageously be selected from the group consisting of CF₃SO₂N⁻SO₂CF₃ (bis(trifluoromethane sulfonyl)imide anion, commonly denoted as TFSI), FSO₂N⁻SO₂F (bis(fluorosulfonyl)imide anion, commonly denoted as FSI), CF₃SO₂N⁻SO₂F, and CF₃SO₂N⁻SO₂N⁻SO₂CF₃.

In a preferred embodiment, the ionic liquid contains:
- a positively charged cation selected from the group consisting of imidazolnium, pyridinium, pyrrolidinium and piperidinium ions optionally containing one or more C₁-C₃₀ alkyl groups, and
- a negatively charged anion selected from the group consisting of halides, fluorinated anions, and borates.

Non-limiting examples of C₁-C₃₀ alkyl groups include, notably, methyl, ethyl, propyl, iso-propyl, n-butyl, isobutyl, sec-butyl, t-butyl, pentyl, isopentyl, 2,2-dimethyl-propyl, hexyl, 2,3-dimethyl-2-butyl, heptyl, 2,2-dimethyl-3-pentyl, 2-methyl-2-hexyl, octyl, 4-methyl-3-heptyl, nonyl, decyl, undecyl and dodecyl groups.

In one preferred embodiment, the film-forming additive according to the present invention is selected from the group consisting of N-methyl-N-propylpyrrolidinium bis(fluorosulfonyl) imide (PYR13FSI), N-butyl-N-methylpyrrolidinium bis(fluorosulfonyl) imide (PYR14FSI), N-methyl-N-propylpyrrolidinium bis(trifluoromethanesulfonyl) imide (PYR13TFSI), and N-butyl-N-methylpyrrolidinium bis(trifluoromethanesulfonyl) imide (PYR14TFSI).

In the present invention, the total amount of e) the film-forming additive may be from 0 to 10 wt%, preferably from 0 to 8 wt%, and more preferably from 0 to 5 wt% with respect to the total weight of the electrolyte composition.

The total amount of e) the film-forming additive, if contained in the liquid electrolyte solution of the present invention, is from 0.05 to 5.0 wt%, preferably from 0.05 to 3.0 wt%, and more preferably from 0.05 to 2.0 wt% with respect to the total weight of the electrolyte composition.

In a preferred embodiment, the total amount of e) the film-forming additive accounts for at least 1.0 wt% of the electrolyte composition.

The present invention also provides a lithium metal battery comprising:
- a negative electrode comprising lithium metal;
- a positive electrode;
- a separator; and
- an electrolyte according to the present invention.

In the present invention, the term "negative electrode" is intended to denote, in particular, the electrode of an electrochemical cell, where oxidation occurs during discharging.

In the present invention, the term "positive electrode" is intended to denote, in particular, the electrode of an electrochemical cell, where reduction occurs during discharging.

In the present invention, the term "electro-active material" is intended to denote an electro-active material that is able to incorporate or insert into its structure and substantially release therefrom lithium ions during the charging phase and the discharging phase of a battery.

In the case of forming a positive electrode for a lithium metal battery, the electro-active material of a positive electrode is not particularly limited. It may comprise a composite metal chalcogenide of formula LiMQ₂, wherein M is at least one metal selected from transition metals such as Co, Ni, Fe, Mn, Cr, and V and Q is a chalcogen such as O or S. Among these, it is preferred to use a lithium-based composite metal oxide of formula LiMO₂, wherein M is the same as defined above. Preferred examples thereof may include LiCoO₂, LiNiO₂, LiNiₓCo₁₋ₓO₂ (0 < x < 1), and spinel-structured LiMn₂O₄. Another preferred examples thereof may include lithium-nickel-manganese-cobalt-based metal oxide of formula LiNiₓMn_{y}Co_{z}O₂ (x+y+z = 1, referred to as NMC), for instance LiNi_{1/3}Mn_{1/3}Co_{1/3}O₂, LiNi_{0.6}Mn_{0.2}Co_{0.2}O₂, and lithium-nickel-cobalt-aluminum-based metal oxide of formula LiNiₓCo_{y}Al_{z}O₂ (x+y+z = 1, referred to as NCA), for instance LiNi_{0.8}Co_{0.15}Al_{0.08}O₂.

As an alternative, still in the case of forming a positive electrode for a lithium metal battery, the electro-active material of a positive electrode may comprise a lithiated or partially lithiated transition metal oxyanion-based electro-active material of formula M₁M₂(JO₄)_{f}E_{1-f}, wherein M₁ is lithium, which may be partially substituted by another alkali metal representing less that 20% of the M₁ metals, M₂ is a transition metal at the oxidation level of +2 selected from Fe, Mn, Ni or mixtures thereof, which may be partially substituted by one or more additional metals at oxidation levels between +1 and +5 and representing less than 35% of the M₂ metals, including 0, JO₄ is any oxyanion wherein J is either P, S, V, Si, Nb, Mo or a combination thereof, E is a fluoride, hydroxide or chloride anion, f is the molar fraction of the JO₄ oxyanion, generally comprised between 0.75 and 1.

The M₁M₂(JO₄)_{f}E_{1-f} electro-active material as defined above is preferably phosphate-based and may have an ordered or modified olivine structure.

More preferably, the electro-active material of a positive electrode has formula Li₃₋ₓM'_{y}M"_{2-y}(JO₄)₃ wherein 0≤x≤3, 0≤y≤2, M' and M" are the same or different metals, at least one of which being a transition metal, JO₄ is preferably PO₄ which may be partially substituted with another oxyanion, wherein J is either S, V, Si, Nb, Mo or a combination thereof. Still more preferably, the electro-active material is a phosphate-based electro-active material of formula Li(FeₓMn₁₋ₓ)PO₄ wherein 0≤x≤1, wherein x is preferably 1 (that is to say, lithium iron phosphate of formula LiFePO₄).

In a preferred embodiment, the electro-active material of a positive electrode is selected from the group consisting of LiMQ₂, wherein M is at least one metal selected from Co, Ni, Fe, Mn, Cr and V and Q is O or S; LiNiₓCo₁₋ₓO₂ (0 < x < 1); spinel-structured LiMn₂O₄; lithium-nickel-manganese-cobalt-based metal oxide of formula LiNiₓMn_{y}Co_{z}O₂ (x+y+z = 1), lithium-nickel-cobalt-aluminum-based metal oxide of formula LiNiₓCo_{y}Al_{z}O₂ (x+y+z = 1), and LiFePO_{4.}

By the term "separator", it is hereby intended to denote a monolayer or multilayer polymeric, nonwoven cellulose or ceramic material/film, which electrically and physically separates the electrodes of opposite polarities within an electrochemical device and is permeable to ions flowing between them.

In the present invention, the separator can be any porous substrate commonly used for a separator in an electrochemical device.

In one embodiment, the separator is a porous polymeric material comprising at least one material selected from the group consisting of polyester such as polyethylene terephthalate and polybutylene terephthalate, polyphenylene sulphide, polyacetal, polyamide, polycarbonate, polyimide, polyether sulfone, polyphenylene oxide, polyphenylene sulfide, polyethylene naphthalene, polyethylene oxide, polyacrylonitrile, polyolefin such as polyethylene and polypropylene, or mixtures thereof, optionally coated with inorganic nanoparticles.

Non-limitative examples of the inorganic nanoparticles comprise SiO₂, TiO₂, Al₂O₃, and ZrO₂.

In one particular embodiment, the separator is a polyester film coated with SiO₂.

In another particular embodiment, the separator is a polyester film coated with Al₂O₃.

In another particular embodiment, the separator is a porous polymeric material coated with polyvinylidene difluoride (PVDF).

The invention will be now explained in more detail with reference to the following examples, whose purpose is merely illustrative and not intended to limit the scope of the invention.

### EXAMPLES

### Raw Materials

- BP120: a fluorinated di-ether as a mixture comprising C₆F₁₀H₄O₂ in an amount of 70 wt% based on the total weight of the fluorinated di-ether having a boiling point of about 120°C, synthesized within Solvay
- BP120*: a fluorinated di-ether as a mixture comprising C₆F₁₀H₄O₂ in an amount of 45 wt% based on the total weight of the fluorinated di-ether having a boiling point of about 120°C, synthesized within Solvay
- BP80: a fluorinated di-ether as a mixture comprising C₆F₁₂H₂O₂ in an amount of 50 wt% based on the total weight of the fluorinated di-ether having a boiling point of about 80°C, synthesized within Solvay
- TFEE: a fluorinated di-ether as a single compound of 1,2-bis(1,1,2,2-tetrafluoroethoxy)ethane having a boiling point of about 160°C, synthesized within Solvay
- TTE : a fluorinated mono-ether as a single compound of 1,1,2,2-tetrafluoroethyl-2,2,3,3-tetrafluoropropyl ether having a boiling point of about 93°C, commercially available from SynQuest.
- DME: 1,2-dimethoxyethane, commercially available from Enchem
- DMC: dimethyl carbonate, commercially available from Enchem
- EC: ethylene carbonate, commercially available from Enchem
- EMC: ethyl methyl carbonate, commercially available from Enchem
- Li salt: lithium bis(fluorosulfonyl)imide (LiFSI), commercially available from Nippon Shokubai

### A/ Formulation of the electrolyte compositions:

The electrolyte compositions were prepared for the Inventive Examples of E1-E2 and Comparative Examples of CE1-CE9. Their constituents are summarized in Table 1 below:

**Table 1**

| Examples | Electrolyte compositions | vol%** |
|---|---|---|
| E1 | DME/BP120 | 20/80 |
| E2 | DME/BP80 | 20/80 |
| CE1 | EC/DMC | 50/50 |
| CE2 | EC/DMC/BP120 | 40/40/20 |
| CE3 | EC/DMC/BP120 | 25/25/50 |
| CE4 | EC/DMC/BP120 | 10/10/80 |
| CE5 | DME/TFEE | 40/60 |
| CE6 | DME/TFEE | 20/80 |
| CE7 | DME/BP120* | 20/80 |
| CE8 | DME/TTE | 20/80 |
| CE9 | DME | 100 |

| | | |
|---|---|---|
| **: vol% with respect to the total volume of the electrolyte composition | | |

When preparing the electrolyte composition of E1, 1M LiFSI as a lithium salt was dissolved in a mixture of 20 vol% of DME and 80 vol% of BP120 with respect to the total volume of the electrolyte composition and was mixed using a magnetic stirrer within a glove box. All the components were added to one bottle and mixed until the solution became transparent.

The electrolyte composition of E2 was prepared in the same manner as E1, except that BP80 was used as a fluorinated di-ether compound instead of BP120.

When preparing the electrolyte composition of CE1, LiFSI was dissolved in a mixture of EC and DMC having a volume ratio of 50:50 to prepare 1 M solution of the lithium salt.

The electrolyte composition of CE2 was prepared in the same manner as CE1, except that LiFSI was dissolved in a mixture of EC, DMC and BP120 having a volume ratio of 40:40:20 to prepare 1 M solution of the lithium salt.

The electrolyte compositions of CE3-CE4 were prepared in the same manner as CE2, except that the volume ratio of EC, DMC and BP120 was 25:25:50 and 10/10/80, respectively.

The electrolyte composition of CE5 was prepared in the same manner as E1, except that TFEE was used instead of BP120 and that the volume ratio of DME/TFEE was 40/60.

The electrolyte composition of CE6 was prepared in the same manner as CE5, except that the volume ratio of DME and TFEE was 20/80, instead of 40/60.

The electrolyte compositions of CE7-CE8 were prepared in the same manner as E1, except that BP120* and TTE were used instead of BP120, respectively.

When preparing the electrolyte of CE9, LiFSI was dissolved in DME only to prepare 1 M solution of the lithium salt. All the components were added to one bottle and mixed until the solution became transparent.

### B/ Preparation of the lithium metal battery:

LiCoO₂, a conducting agent Super-P (commercially available from LiFUN Technology), polyvinylidene fluoride (PVDF), and N-methyl-2-pyrrolidone (NMP) were mixed to obtain a positive electrode composition. The positive electrode composition included LiCoO₂, a conducting agent, and PVDF having a weight ratio of about 97.8:1.2:1.0.

The positive electrode composition was coated on the top surface of an aluminum foil with a thickness of about 20 µm, and then thermal treatment was applied under vacuum at about 110°C, so as to obtain the positive electrode.

A polyethylene separator (commercially available from Tonen Corporation) was disposed between the positive electrode obtained according to the above-described process and a lithium metal as the negative electrode (commercially available from Honjo Metal Ltd.) with a thickness of about 20 µm, thereby preparing a lithium metal battery as coin cell (CR2032 type).

### C/Activation of cells and Measurement of initial cell performance

1- Formation (Activation of lithium metal cells): After the manufacturing of the coin cells, the cells were stored at 25°C for 10 hours (Aging process). Then the cells were charged to 4.4V and discharged to 3.0V repeatedly for 3 cycles to activate the cells.
2- Measurement of cycling performance: The cycling ability of each coin cell was evaluated. Then, each cell was subj ected to a repetition of cycles of charge and discharge. One cycle consisted of a charging phase at a charging current of C followed by a discharge phase at a discharge current of C.

### D/Performance Measurement of the lithium metal cells

The coin cells were tested at various conditions for checking properties as detailed below:
i) Capacity check for 3 cycles
   o Charging: 0.1C/4.2V/0.05C at constant current and constant voltage (CC-CV)
   o Discharging: 0.1C/3.0V (CC)
ii) Continuous cycling test (up to 300 cycles)
   o Charging: 0.5C/4.4V/0.05C (CC-CV)
   o Discharging: 0.5C/3.0V (CC)

### E/ Cycle tests - Capacity retention:

The cycling ability of each cell was evaluated. Then, each cell was subjected to a repetition of cycles of charge and discharge. The following results were obtained as shown in Table 2 below:

**Table 2**

| Examples | C rate | Number of cycles at 80% of capacity retention | Average Coulombic efficiency (%)* |
|---|---|---|---|
| E1 | 0.5C | 220 | 99.92 |
| E2 | 0.5C | 231 | 99.95 |
| CE1 | 0.5C | N/A (short circuit) | N/A (short circuit) |
| CE2 | 0.5C | 28 | 98.06 |
| CE3 | 0.5C | 47 | 97.74 |
| CE4 | 0.5C | 7 (phase separation) | 96.65 |
| CE5 | 0.5C | 48 | 98.63 |
| CE6 | 0.5C | 172 | 99.69 |
| CE7 | 0.5C | 187 | 99.80 |
| CE8 | 0.5C | 160 | 99.70 |
| CE9 | 0.5C | 33 | 97.75 |

| | | | |
|---|---|---|---|
| *Average value of Coulombic efficiency (%) from the beginning of the cycles to the number of cycles at 80% of capacity retention ('average Coulombic efficiency (%)' in short) | | | |

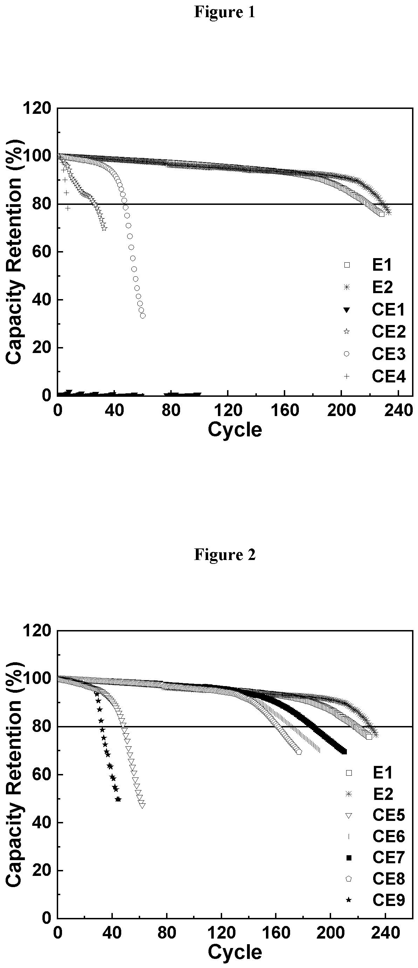

Figure 1 shows the number of cycles at 80% of capacity retention of Inventive Examples E1-E2 and Comparative Examples CE1-CE4 as a function of the cycle number. Notably, the number of cycles at 80% of capacity retention of E1-E2, each comprising the electrolyte composition according to the present invention, were much higher than those of Comparative Examples, i.e., CE1-CE4.

In addition, as indicated in the above Table 2, one can note that the average Coulombic efficiency (%) of E1-E2 was superior to that of Comparative Examples, respectively, both E1 and E2 above 99.9% until 220 cycles for E1 and 231 cycles for E2. The Coulombic efficiency of E1-E2 remained essentially constant until about at least 180 cycles and decreased as the cycles further increased, but very slowly, whereas the Coulombic efficiency of CE1-CE4 decreased rapidly mostly around 10~40 cycles.

The electrolyte composition of CE6, which was the mixture of DME and TFEE (v/v 20/80) exhibited relatively good capacity retention, i.e., 172 cycles at 80% of capacity retention, but still much lower than that of E1-E2 according to the present invention, 220 cycles, and 231 cycles, respectively. Moreover, the average Coulombic efficiency (%) of CE6 was lower than that of E1-E2.

The electrolyte composition of CE7 was the mixture of DME and BP120*, where BP120* was a fluorinated di-ether as a mixture comprising C₆F₁₀H₄O₂ in an amount of 45 wt% based on the total weight of the fluorinated di-ether having a boiling point of about 120°C. The number of cycles at 80% of capacity retention (187 cycles) was relatively high and the highest among the Comparative Examples CE1-CE9, but still about 15% lower than that of E1 and about 19% lower than that of E2 according to the present invention, which meant a substantial difference in cycling performance. The average Coulombic efficiency (%) of CE7 (99.80%) was also relatively high and the highest among the Comparative ones, but still lower than that of E1-E2.

It was clearly demonstrated that the electrolyte compositions E1-E2 according to the present invention exhibited outstanding and balanced performances in terms of both the capacity retention and Coulombic efficiency.

## Claims

1. An electrolyte composition for lithium metal batteries, comprising:
a) at least one fluorinated di-ether containing from 4 to 10 carbon atoms, represented by Formula I
R¹-O-R²-O-R³ (Formula I)
wherein each R¹ and R³ is independently a fluorinated alkyl group, and R² is an optionally fluorinated alkyl group, represented by Formula II
CₐF_{b}H_{c} (Formula II)
wherein a is an integer from 1 to 6, b+c is an integer from 2 to 10, and if b is 0, R¹ and R³ independently have no H;
b) at least one non-fluorinated ether; and
c) at least one lithium salt,
wherein a) the fluorinated di-ether is in an amount of at least 50% by volume (vol%), based on the total volume of a) the fluorinated di-ether and b) the non-fluorinated ether.

2. The electrolyte composition for lithium metal batteries according to claim 1, wherein a) the fluorinated di-ether contains from 5 to 8 carbon atoms, preferably 6 carbon atoms.

3. The electrolyte composition for lithium metal batteries according to claim 1 or 2, comprising from 60 to 90 vol% of a) the fluorinated di-ether and from 10 to 40 vol% of b) the non-fluorinated ether, based on the total volume of a) the fluorinated di-ether and b) the non-fluorinated ether.

4. The electrolyte composition for lithium metal batteries according to any of claims 1 to 3, wherein the molar ratio F/H in a) the fluorinated di-ether is from 2.0 to 11.0, preferably from 2.5 to 8.0, and more preferably from 2.5 to 6.0.

5. The electrolyte composition for lithium metal batteries according to any of claims 1 to 4, wherein a) the fluorinated di-ether is a mixture comprising C₆F₁₀H₄O₂ in an amount of at least 50% by weight (wt%), preferably at least 70 wt%, based on the total weight of a) the fluorinated di-ether.

6. The electrolyte composition for lithium metal batteries according to any of claims 1 to 4, wherein a) the fluorinated di-ether is a mixture comprising C₆F₁₂H₂O₂ in an amount of at least 50 wt%, based on the total weight of a) the fluorinated di-ether.

7. The electrolyte composition for lithium metal batteries according to any of claims 1 to 6, wherein b) the non-fluorinated ether comprises dimethoxyethane (DME), 1,3-dioxolane (DOL), dibutyl ether, tetraethylene glycol dimethyl ether (TEGME), diethylene glycol dimethyl ether (DEGDME), diethylene glycol diethyl ether (DEGDEE), polyethylene glycol dimethyl ether (PEGDME), 2-methyltetrahydrofuran, tetrahydrofuran (THF), triethylphosphate (TEP), and mixtures thereof.

8. The electrolyte composition for lithium metal batteries according to any of claims 1 to 7, wherein c) the lithium salt comprises lithium hexafluorophosphate (LiPF₆), lithium perchlorate (LiClO₄), lithium hexafluoroarsenate (LiAsF₆), lithium hexafluoroantimonate (LiSbF₆), lithium hexafluorotantalate (LiTaF₆), lithium tetrachloroaluminate (LiAlCl₄), lithium tetrafluoroborate (LiBF₄), lithium chloroborate (Li₂B₁₀Cl₁₀), lithium fluoroborate (Li₂B₁₀F₁₀), Li₂B₁₂FₓH₁₂₋ₓ wherein x=0-12, LiPFₓ(R_{F})₆₋ₓ and LiBF_{y}(R_{F})_{4-y} wherein R_{F} represents perfluorinated C₁-C₂₀ alkyl groups or perfluorinated aromatic groups, x=0-5 and y=0-3, LiBF₂[O₂C(CX₂)ₙCO₂], LiPF₂[O₂C(CX₂)ₙCO₂]₂, LiPF₄[O₂C(CX₂)ₙCO₂] wherein X is selected from the group consisting of H, F, Cl, C₁-C₄ alkyl groups and fluorinated alkyl groups, and n=0-4, lithium trifluoromethane sulfonate (LiCF₃SO₃), lithium bis(fluorosulfonyl)imide Li(FSO₂)₂N (LiFSI), LiN(SO₂CₘF₂ₘ₊₁)(SO₂CₙF₂ₙ₊₁) and LiC(SO₂CₖF₂ₖ₊₁)(SO₂CₘF₂ₘ₊₁)(SO₂CₙF₂ₙ₊₁) wherein k=1-10, m=1-10 and n=1-10, LiN(SO₂CₚF₂ₚSO₂) and LiC(SO₂CₚF₂ₚSO₂)(SO₂C_{q}F_{2q+1}) wherein p=1-10 and q=1-10, lithium salts of chelated orthoborates and chelated orthophosphates such as lithium bis(oxalato)borate [LiB(C₂O₄)₂], lithium bis(malonato)borate [LiB(O₂CCH₂CO₂)₂], lithium bis(difluoromalonato) borate [LiB(O₂CCF₂CO₂)₂], lithium (malonatooxalato) borate [LiB(C₂O₄)(O₂CCH₂CO₂)], lithium (difluoromalonatooxalato) borate [LiB(C₂O₄)(O₂CCF₂CO₂)], lithium tris(oxalato) phosphate [LiP(C₂O₄)₃], lithium tris(difluoromalonato) phosphate [LiP(O₂CCF₂CO₂)₃], lithium difluorophosphate (LiPO₂F₂), lithium 2-trifluoromethyl-4,5-dicyanoimidazole (LiTDI), and mixtures thereof.

9. The electrolyte composition for lithium metal batteries according to any of claims 1 to 8, wherein a concentration of c) the lithium salt is from 1 M to 8 M, preferably from 1 M to 4 M, and more preferably 1 M to 2 M.

10. The electrolyte composition for lithium metal batteries according to any of claims 1 to 9, further comprising d) at least one fluorinated organic carbonate compound in an amount of from 5 to 50 wt%, preferably from 10 to 40 wt%, and more preferably from 20 to 30 wt% with respect to the total weight of the electrolyte composition.

11. The electrolyte composition for lithium metal batteries according to claim 10, wherein d) the fluorinated organic carbonate compound comprises 4-fluoroethylene carbonate, 4,5-difluoro-1,3-dioxolan-2-one, 4,5-difluoro-4-methyl-1,3-dioxolan-2-one, 4,5-difluoro-4,5-dimethyl-1,3-dioxolan-2-one, 4,4-difluoro-1,3-dioxolan-2-one, 4,4,5-trifluoro-1,3-dioxolan-2-one, tetrafluoroethylene carbonate, 2,2,3,3-tetrafluoropropyl methyl carbonate, bis(2,2,3,3-tetrafluoropropyl) carbonate, bis(2,2,2-trifluoroethyl) carbonate, 2,2,2-trifluoroethylmethyl carbonate, bis(2,2-difluoroethyl) carbonate, 2,2-difluoroethylmethyl carbonate, 1-fluoroethylmethyl carbonate, 1-fluoroethylpropyl carbonate, 1-fluoroethylethyl carbonate, 1-fluoroethylphenyl carbonate, 1-fluoroethyl-2,2,2-trifluoroethyl carbonate, allyl-1-fluoroethyl carbonate, fluoromethylmethyl carbonate, 2-cyanoethyl-1-fluoroethyl carbonate, 1-fluoroethyl-propagyl carbonate, 4-(2,2-difluoroethoxy)ethylene carbonate, 4-(2,2,2-trifluoroethoxy)ethylene carbonate, ethyl-fluoro(phenyl)methyl carbonate, tris(trifluoroethyl)phosphate, methyl-3,3,3-trifluoropropanonate, 3-((2-oxo-1,3-dioxolan-4-yl)oxy)propanenitrile, 2,2-difluoroethyl methyl carbonate, 2,2-difluoroethyl acetate, 2,2-difluoroethyl methyl carbonate, 2,2-difluoroethyl propionate, and mixtures thereof.

12. The electrolyte composition for lithium metal batteries according to any of claims 1 to 11, further comprising e) at least one film-forming additive in an amount of from 0.05 to 5.0 wt% and preferably from 0.05 to 2.0 wt% with respect to the total weight of the electrolyte composition.

13. The electrolyte composition for lithium metal batteries according to claim 12, wherein e) the film-forming additive comprises cyclic sulphite and sulfate compounds comprising 1,3-propanesultone (PS), ethylene sulphite (ES) and prop-1-ene-1,3-sultone (PES), sulfone derivatives comprising dimethyl sulfone, tetramethylene sulfone (also known as sulfolane), ethyl methyl sulfone and isopropyl methyl sulfone, nitrile derivatives comprising succinonitrile, adiponitrile, glutaronitirle and 4,4,4-trifluoronitrile, and lithium nitrate (LiNO₃); boron derivatives salt comprising lithium difluoro oxalato borate (LiDFOB), lithium fluoromalonato (difluoro)borate (LiFMDFB), vinyl acetate, biphenyl benzene, isopropyl benzene, hexafluorobenzene, tris(trimethylsilyl)phosphate, triphenyl phosphine, ethyl diphenylphosphinite, triethyl phosphite, tris(2,2,2-trifluoroethyl) phosphite, maleic anhydride, vinylene carbonate, vinyl ethylene carbonate, cesium bis(triflulorosulfonyl)imide (CsTFSI), cesium hexafluorophosphate (CsPF₆), cesium fluoride (CsF), trimethylboroxine (TMB), tributyl borate (TBB), 2-(2,2,3,3,3-pentafluoropropoxy)-1,3,2-dioxaphospholane (PFPOEPi), 2-(2,2,3,3,3-pentafluoropropoxy)-4-(trifluormethyl)-1,3,2-dioxaphospholane (PFPOEPi-1CF₃), lithium hexafluorophosphate (LiPF₆), silver nitrate (AgNO₃), silver hexafluorophosphate (AgPF₆), tris(trimethylsilyl)phosphine (TMSP), 1,6-divinylperfluorohexane, and mixtures thereof.

14. A lithium metal battery comprising
- a negative electrode comprising lithium metal;
- a positive electrode;
- a separator; and
- an electrolyte composition according to any of claims 1 to 13.

15. The lithium metal battery according to claim 14, wherein the separator is a porous polymeric material comprising at least one material selected from the group consisting of polyester such as polyethylene terephthalate and polybutylene terephthalate, polyphenylene sulphide, polyacetal, polyamide, polycar bonate, polyimide, polyether sulfone, polyphenylene oxide, polyphenylene sulfide, polyethylene naphthalene, polyethylene oxide, polyacrylonitrile, polyolefin such as polyethylene and polypropylene, or mixtures thereof, optionally coated with inorganic nanoparticles.

## Patentansprüche

1. Elektrolytzusammensetzung für Lithium-Metall-Batterien, umfassend:
a) mindestens einen fluorierten Diether mit 4 bis 10 Kohlenstoffatomen, der durch Formel I wiedergegeben wird:
R¹-O-R²-O-R³ (Formel I)
wobei R¹ und R³ jeweils unabhängig für eine fluorierte Alkylgruppe stehen und R² für eine gegebenenfalls fluorierte Alkylgruppe stehen, welche durch Formel II wiedergegeben wird:
CₐF_{b}H_{c} (Formel II)
wobei a für eine ganze Zahl von 1 bis 6 steht, b+c für eine ganze Zahl von 2 bis 10 steht und dann, wenn b für 0 steht, R¹ und R³ unabhängig kein H aufweisen;
b) mindestens einen nichtfluorierten Ether; und
c) mindestens ein Lithiumsalz,
wobei a) der fluorierte Diether in einer Menge von mindestens 50 Volumen-% (Vol.-%), bezogen auf das Gesamtvolumen von a) dem fluorierten Diether und b) dem nichtfluorierten Ether, vorliegt.

2. Elektrolytzusammensetzung für Lithium-Metall-Batterien nach Anspruch 1, wobei a) der fluorierte Diether 5 bis 8 Kohlenstoffatome, vorzugsweise 6 Kohlenstoffatome, enthält.

3. Elektrolytzusammensetzung für Lithium-Metall-Batterien nach Anspruch 1 oder 2, umfassend 60 bis 90 Vol.-% a) des fluorierten Diethers und 10 bis 40 Vol.-% b) des nichtfluorierten Ethers, bezogen auf das Gesamtvolumen von a) dem fluorierten Diether und b) dem nichtfluorierten Ether.

4. Elektrolytzusammensetzung für Lithium-Metall-Batterien nach einem der Ansprüche 1 bis 3, wobei das Molverhältnis F/H in a) dem fluorierten Diether 2,0 bis 11,0, vorzugsweise 2,5 bis 8,0 und weiter bevorzugt 2,5 bis 6,0 beträgt.

5. Elektrolytzusammensetzung für Lithium-Metall-Batterien nach einem der Ansprüche 1 bis 4, wobei es sich bei a) dem fluorierten Diether um eine Mischung handelt, die C₆F₁₀H₄O₂ in einer Menge von mindestens 50 Gewichts-% (Gew.-%), vorzugsweise mindestens 70 Gew.-%, bezogen auf das Gesamtgewicht von a) dem fluorierten Diether, umfasst.

6. Elektrolytzusammensetzung für Lithium-Metall-Batterien nach einem der Ansprüche 1 bis 4, wobei es sich bei a) dem fluorierten Diether um eine Mischung handelt, die C₆F₁₂H₂O₂ in einer Menge von mindestens 50 Gew.-%, bezogen auf das Gesamtgewicht von a) dem fluorierten Diether, umfasst.

7. Elektrolytzusammensetzung für Lithium-Metall-Batterien nach einem der Ansprüche 1 bis 6, wobei b) der nichtfluorierte Ether Dimethoxyethan (DME), 1,3-Dioxolan (DOL), Dibutylether, Tetraethylenglykoldimethylether (TEGME), Diethylenglykoldimethylether (DEGDME), Diethylenglykoldiethylether (DEGDEE), Polyethylenglykoldimethylether (PEGDME), 2-Methyltetrahydrofuran, Tetrahydrofuran (THF), Triethylphosphat (TEP) und Mischungen davon umfasst.

8. Elektrolytzusammensetzung für Lithium-Metall-Batterien nach einem der Ansprüche 1 bis 7, wobei c) das Lithiumsalz Lithiumhexafluorophosphat (LiPF₆), Lithiumperchlorat (LiClO₄), Lithiumhexafluoroarsenat (LiAsF₆), Lithiumhexafluoroantimonat (LiSbF₆), Lithiumhexafluorotantalat (LiTaF₆), Lithiumtetrachloroaluminat (LiAlCl₄), Lithiumtetrafluoroborat (LiBF₄), Lithiumchloroborat (Li₂B₁₀Cl₁₀), Lithiumfluoroborat (Li₂B₁₀F₁₀), Li₂B₁₂FₓH₁₂₋ₓ mit x=0-12, LiPFₓ(R_{F})₆₋ₓ und LiBF_{y}(R_{F})_{4-y}, wobei R_{F} für perfluorierte C₁-C₂₀-Alkylgruppen oder perfluorierte aromatische Gruppen steht, x=0-5 und y=0-3, LiBF₂[O₂C(CX₂)ₙCO₂], LiPF₂[O₂C(CX₂)ₙCO₂]₂, LiPF₄[O₂C(CX₂)ₙCO₂], wobei X aus der Gruppe bestehend aus H, F, Cl, C₁-C₄-Alkylgruppen und fluorierten Alkylgruppen ausgewählt ist und n=0-4, Lithiumtrifluormethansulfonat (LiCF₃SO₃), Lithiumbis (fluorsulfonyl) imid Li(FSO₂)₂N (LiFSI), LiN(SO₂CₘF₂ₘ₊₁)(SO₂CₙF₂ₙ₊₁) und LiC(SO₂CₖF₂ₖ₊₁)(SO₂CₘF₂ₘ₊₁)(SO₂CₙF₂ₙ₊₁) mit k=1-10, m=1-10 und n=1-10, LiN(SO₂CₚF₂ₚSO₂) und LiC(SO₂CₚF₂ₚSO₂)(SO₂C_{q}F_{2q+1}) mit p=1-10 und q=1-10, Lithiumsalze von chelatisierten Orthoboraten und chelatisierten Orthophosphaten wie Lithiumbis(oxalato)borat [LiB(C₂O₄)₂], Lithiumbis(malonato)borat [LiB(O₂CCH₂CO₂)₂], Lithiumbis(difluormalonato)borat [LiB(O₂CCF₂CO₂)₂], Lithium(malonatooxalato)borat [LiB(C₂O₄)(O₂CCH₂CO₂)], Lithium(difluormalonatooxalato)borat [LiB(C₂O₄)(O₂CCF₂CO₂)], Lithiumtris(oxalato)phosphat [LiP(C₂O₄)₃], Lithiumtris(difluormalonato)phosphat [LiP(O₂CCF₂CO₂)₃], Lithiumdifluorophosphat (LiPO₂F₂), Lithium-2-trifluormethyl-4,5-dicyanoimidazol (LiTDI) und Mischungen davon umfasst.

9. Elektrolytzusammensetzung für Lithium-Metall-Batterien nach einem der Ansprüche 1 bis 8, wobei eine Konzentration von c) dem Lithiumsalz 1 M bis 8 M, vorzugsweise 1 M bis 4 M und weiter bevorzugt 1 M bis 2 M beträgt.

10. Elektrolytzusammensetzung für Lithium-Metall-Batterien nach einem der Ansprüche 1 bis 9, ferner umfassend d) mindestens eine fluorierte organische Carbonatverbindung in einer Menge von 5 bis 50 Gew.-%, vorzugsweise 10 bis 40 Gew.-% und weiter bevorzugt 20 bis 30 Gew.-%, bezogen auf das Gesamtgewicht der Elektrolytzusammensetzung.

11. Elektrolytzusammensetzung für Lithium-Metall-Batterien nach Anspruch 10, wobei d) die fluorierte organische Carbonatverbindung 4-Fluorethylencarbonat, 4,5-Difluor-1,3-dioxolan-2-on, 4,5-Difluor-4-methyl-1,3-dioxolan-2-on, 4,5-Difluor-4,5-dimethyl-1,3-dioxolan-2-on, 4,4-Difluor-1,3-dioxolan-2-on, 4,4,5-Trifluor-1,3-dioxolan-2-on, Tetrafluorethylencarbonat, 2,2,3,3-Tetrafluorpropylmethylcarbonat, Bis(2,2,3,3-tetrafluorpropyl)carbonat, Bis(2,2,2-trifluorethyl)carbonat, 2,2,2-Trifluorethylmethylcarbonat, Bis(2,2-difluorethyl)carbonat, 2,2-Difluorethylmethylcarbonat, 1-Fluorethylmethylcarbonat, 1-Fluorethylpropylcarbonat, 1-Fluorethylethylcarbonat, 1-Fluorethylphenylcarbonat, 1-Fluorethyl-2,2,2-trifluorethylcarbonat, Allyl-1-fluorethylcarbonat, Fluormethylmethylcarbonat, 2-Cyanoethyl-1-fluorethylcarbonat, 1-Fluorethylpropagylcarbonat, 4-(2,2-Difluorethoxy)ethylencarbonat, 4-(2,2,2-Trifluorethoxy)ethylencarbonat, Ethylfluor(phenyl)methylcarbonat, Tris(trifluorethyl)phosphat, Methyl-3,3,3-trifluorpropanonat, 3-((2-Oxo-1,3-dioxolan-4-yl)oxy)propannitril, 2,2-Difluorethylmethylcarbonat, 2,2-Difluorethylacetat, 2,2-Difluorethylmethylcarbonat, 2,2-Difluorethylpropionat und Mischungen davon umfasst.

12. Elektrolytzusammensetzung für Lithium-Metall-Batterien nach einem der Ansprüche 1 bis 11, ferner umfassend e) mindestens ein filmbildendes Additiv in einer Menge von 0,05 bis 5,0 Gew.-% und vorzugsweise von 0,05 bis 2,0 Gew.-%, bezogen auf das Gesamtgewicht der Elektrolytzusammensetzung.

13. Elektrolytzusammensetzung für Lithium-Metall-Batterien nach Anspruch 12, wobei e) das filmbildende Additiv cyclische Sulfit- und Sulfatverbindungen, die 1,3-Propansulton (PS), Ethylensulfit (ES) und Prop-1-en-1,3-sulton (PES) umfassen, Sulfonderivate, die Dimethylsulfon, Tetramethylensulfon (auch bekannt als Sulfolan), Ethylmethylsulfon und Isopropylmethylsulfon umfassen, Nitrilderivate, die Bernsteinsäuredinitril, Adipinsäuredinitril, Glutarsäuredinitril und 4,4,4-Trifluornitril umfassen, und Lithiumnitrat (LiNO₃); ein Borderivatsalz, das Lithiumdifluorooxalatoborat (LiDFOB), Lithiumfluormalonato(difluoro)borat (LiFMDFB) umfasst, Vinylacetat, Biphenylbenzol, Isopropylbenzol, Hexafluorbenzol, Tris(trimethylsilyl)phosphat, Triphenylphosphin, Ethyldiphenylphosphinit, Triethylphosphit, Tris(2,2,2-trifluorethyl)phosphit, Maleinsäureanhydrid, Vinylencarbonat, Vinylethylencarbonat, Caesiumbis(trifluorsulfonyl)imid (CsTFSI), Caesiumhexafluorophosphat (CsPF₆), Caesiumfluorid (CsF), Trimethylboroxin (TMB), Tributylborat (TBB), 2-(2,2,3,3,3-Pentafluorpropoxy)-1,3,2-dioxaphospholan (PFPOEPi), 2-(2,2,3,3,3-Pentafluorpropoxy)-4-(trifluormethyl)-1,3,2-dioxaphospholan (PFPOEPi-1CF₃), Lithiumhexafluorophosphat (LiPF₆), Silbernitrat (AgNO₃), Silberhexafluorophosphat (AgPF₆), Tris(trimethylsilyl)phosphin (TMSP), 1,6-Divinylperfluorhexan und Mischungen davon umfasst.

14. Lithium-Metall-Batterie, umfassend
- eine negative Elektrode, die Lithiummetall umfasst;
- eine positive Elektrode;
- einen Separator; und
- eine Elektrolytzusammensetzung nach einem der Ansprüche 1 bis 13.

15. Lithium-Metall-Batterie nach Anspruch 14, wobei es sich bei dem Separator um ein poröses Polymermaterial handelt, das mindestens ein Material umfasst, das aus der Gruppe bestehend aus Polyester wie Polyethylenterephthalat und Polybutylenterephthalat, Polyphenylensulfid, Polyacetal, Polyamid, Polycarbonat, Polyimid, Polyethersulfon, Polyphenylenoxid, Polyphenylensulfid, Polyethylennaphthalin, Polyethylenoxid, Polyacrylnitril, Polyolefin wie Polyethylen und Polypropylen oder Mischungen davon, gegebenenfalls mit anorganischen Nanopartikeln beschichtet, ausgewählt ist.

## Revendications

1. Composition d'électrolyte pour batteries lithium métal, comprenant :
a) au moins un di-éther fluoré contenant de 4 à 10 atomes de carbone, représenté par la formule I
R¹-O-R²-O-R³ (formule I)
dans laquelle chaque R¹ et R³ est indépendamment un groupe alkyle fluoré, et R² est un groupe alkyle éventuellement fluoré, représenté par la formule II
CₐF_{b}H_{c} (formule II)
dans laquelle a est un entier de 1 à 6, b + c est un entier de 2 à 10, et si b est 0, R¹ et R³ indépendamment ne possèdent pas de H ;
b) au moins un éther non fluoré ; et
c) au moins un sel de lithium,
dans laquelle a) le di-éther fluoré est présent en une quantité d'au moins 50 % en volume (% en volume), par rapport au volume total de a) le di-éther fluoré et b) l'éther non fluoré.

2. Composition d'électrolyte pour batteries lithium métal selon la revendication 1, dans laquelle a) le di-éther fluoré contient de 5 à 8 atomes de carbone, de préférence 6 atomes de carbone.

3. Composition d'électrolyte pour batteries lithium métal selon la revendication 1 ou 2, comprenant de 60 à 90 % en volume de a) le di-éther fluoré et de 10 à 40 % en volume de b) l'éther non fluoré, par rapport au volume total de a) le di-éther fluoré et b) l'éther non fluoré.

4. Composition d'électrolyte pour batteries lithium métal selon l'une quelconque des revendications 1 à 3, dans laquelle le rapport molaire F/H dans a) le di-éther fluoré est de 2,0 à 11,0, de préférence de 2,5 à 8,0, et plus préférablement de 2,5 à 6,0.

5. Composition d'électrolyte pour batteries lithium métal selon l'une quelconque des revendications 1 à 4, dans laquelle a) le di-éther fluoré est un mélange comprenant du C₆F₁₀H₄O₂ en une quantité d'au moins 50 % en poids (% en poids), de préférence d'au moins 70 % en poids, par rapport au poids total de a) le di-éther fluoré.

6. Composition d'électrolyte pour batteries lithium métal selon l'une quelconque des revendications 1 à 4, dans laquelle a) le di-éther fluoré est un mélange comprenant C₆F₁₂H₂O₂ en une quantité d'au moins 50 % en poids, sur la base du poids total de a) le di-éther fluoré.

7. Composition d'électrolyte pour batteries lithium métal selon l'une quelconque des revendications 1 à 6, dans laquelle b) l'éther non fluoré comprend le diméthoxyéthane (DME), le 1,3-dioxolane (DOL), le dibutyléther, le tétraéthylèneglycol diméthyléther (TEGME), le diéthylèneglycol diméthyléther (DEGDME), le diéthylèneglycol diéthyléther (DEGDEE), le polyéthylèneglycol diméthyléther (PEGDME), le 2-méthyltétrahydrofurane (THF), le phosphate de triéthyle (TEP) et leurs mélanges.

8. Composition d'électrolyte pour batteries lithium métal selon l'une quelconque des revendications 1 à 7, dans laquelle c) le sel de lithium comprend de l'hexafluorophosphate de lithium (LiPF₆), perchlorate de lithium (LiClO₄), hexafluoroarséniate de lithium (LiAsF₆), hexafluoroantimonate de lithium (LiSbF₆), hexafluorotantalate de lithium (LiTaF₆), tétrachloroaluminate de lithium (LiAlCl₄), tétrafluoroborate de lithium (LiBF₄), chloroborate de lithium (Li₂B₁₀Cl₁₀), fluoroborate de lithium (Li₂B₁₀F₁₀), Li₂B₁₂FₓH₁₂₋ₓ où x = 0-12, LiPFₓ(R_{F})₆₋ₓ et LiBF_{y}(R_{F})_{4-y} dans laquelle R_{F} représente des groupes C₁-C₂₀ alkyle perfluorés ou des groupes aromatiques perfluorés, x = 0-5 et y = 0-3, LiBF₂[O₂C(CX₂)ₙCO₂], LiPF₂[O₂C(CX₂)ₙCO₂]₂, LiPF₄[O₂C(CX₂)ₙCO₂], dans laquelle X est choisi dans le groupe constitué par H, F, Cl, des groupes C₁-C₄ alkyle et des groupes alkyle fluorés, et n = 0-4, trifluorométhane sulfonate de lithium (LiCF₃SO₃), bis(fluorosulfonyl)imide de lithium Li(FSO₂)₂N(LiFSI), LiN(SO₂CₘF₂ₘ₊₁)(SO₂CₙF₂ₙ₊₁) et LiC(SO₂CₖF₂ₖ₊₁)(SO₂CₘF₂ₘ₊₁)(SO₂CₙF₂ₙ₊₁) où k = 1-10, m = 1-10 et n = 1-10, LiN(SO₂CₚF₂ₚSO₂) et LiC(SO₂CₚF₂ₚSO₂)(SO₂C_{q}F_{2q+1}), où p = 1-10 et q = 1-10, sels de lithium d'orthoborates chélatés et d'orthophosphates chélatés tels que le bis(oxalato)borate de lithium [LiB(C₂O₄)₂ , bis(malonato)borate de lithium [LiB(O₂CCH₂CO₂)₂], bis(difluoromalonato)borate de lithium [LiB(O₂CCF₂CO₂)₂], (malonatooxalato) borate de lithium [LiB(C₂O₄)(O₂CCH₂CO₂)], (difluoromalonatooxalato) borate de lithium [LiB(C₂O₄)(O₂CCF₂CO₂)], tris (oxalato)phosphate de lithium [LiP(C₂O₄)₃], tris (difluoromalonato)phosphate de lithium [LiP(O₂CCF₂CO₂)₃], difluorophosphate de lithium (LiPO₂F₂), 2-trifluorométhyl-4,5-dicyanoimidazole de lithium (LiTDI) et leurs mélanges.

9. Composition d'électrolyte pour batteries lithium métal selon l'une quelconque des revendications 1 à 8, dans laquelle une concentration de c) le sel de lithium est de 1 M à 8 M, de préférence de 1 M à 4 M, et plus préférablement de 1 M à 2 M.

10. Composition d'électrolyte pour batteries lithium métal selon l'une quelconque des revendications 1 à 9, comprenant en outre d) au moins un composé de carbonate organique fluoré en une quantité de 5 à 50 % en poids, de préférence de 10 à 40 % en poids, et plus préférablement de 20 à 30 % en poids par rapport au poids total de la composition d'électrolyte.

11. Composition d'électrolyte pour batteries lithium métal selon la revendication 10, dans laquelle d) le composé de carbonate organique fluoré comprend le carbonate de 4-fluoroéthylène, 4,5-difluoro-1,3-dioxolan-2-one, 4,5-difluoro-4-méthyl-1,3-dioxolan-2-one, 4,5-difluoro-4,5-diméthyl-1,3-dioxolan-2-one, 4,4-difluoro-1,3-dioxolan-2-one, 4,4,5-trifluoro-1,3-dioxolan-2-one, carbonate de tétrafluoroéthylène, carbonate de méthyle de 2,2,3,3-tétrafluoropropyle, carbonate de bis(2,2,3,3-tétrafluoropropyle), carbonate de bis(2,2,2-trifluoroéthyle), carbonate de 2,2,2-trifluoroéthylméthyle, carbonate de bis(2,2-difluoroéthyle), carbonate de 2,2-difluoroéthylméthyle, carbonate de 1-fluoroéthylméthyle, carbonate de 1-fluoroéthylpropyle, carbonate de 1-fluoroéthyléthyle, carbonate de 1-fluoroéthylphényle, carbonate de 1-fluoroéthyl-2,2,2-trifluoroéthyle, carbonate d'allyl-1-fluoroéthyle, carbonate de fluorométhylméthyle, carbonate de 2-cyanoéthyl-1-fluoroéthyle, carbonate de 1-fluoroéthyle-propagyle, carbonate de 4-(2,2-difluoroéthoxy)éthylène, carbonate de 4-(2,2,2-trifluoroéthoxy)éthylène, carbonate d'éthyl-fluoro(phényl)méthyle, phosphate de tris(trifluoroéthyle), méthyl-3,3,3-trifluoropropanonate, 3-((2-oxo-1,3-dioxolan-4-yl)oxy)propanenitrile, carbonate de 2,2-difluoroéthyle et méthyle, acétate de 2,2-difluoroéthyle, carbonate de 2,2-difluoroéthyle et méthyle, propionate de 2,2-difluoroéthyle, et leurs mélanges.

12. Composition d'électrolyte pour batteries lithium métal selon l'une quelconque des revendications 1 à 11, comprenant en outre e) au moins un additif filmogène en une quantité de 0,05 à 5,0 % en poids et de préférence de 0,05 à 2,0 % en poids par rapport au poids total de la composition d'électrolyte.

13. Composition d'électrolyte pour batteries lithium métal selon la revendication 12, dans laquelle e) l'additif filmogène comprend des composés sulfites et sulfates cycliques comprenant de la 1,3-propanesultone (PS), de l'éthylène sulfite (ES) et de la prop-1-ène-1,3-sultone (PES), des dérivés de sulfone comprenant de la diméthylsulfone, de la tétraméthylène sulfone (également connue sous le nom de sulfolane), de l'éthylméthylsulfone et de l'isopropylméthylsulfone, des dérivés de nitrile comprenant du succinonitrile, de l'adiponitrile, du glutaronitrile et du 4,4,4-trifluoronitrile, et du nitrate de lithium (LiNO₃) ; un sel de dérivés du bore comprenant du difluorooxalatoborate de lithium (LiDFOB), du fluoromalonato(difluoro)borate de lithium (LiFMDFB), de l'acétate de vinyle, du biphénylbenzène, de l'isopropylbenzène, de l'hexafluorobenzène, du tris(triméthylsilyl)phosphate, de la triphénylphosphine, de l'éthyldiphénylphosphinite, du triéthylphosphite, du tris(2,2,2-trifluoroéthyl)phosphite, de l'anhydride maléique, du carbonate de vinylène, du carbonate de vinyléthylène, du bis(trifluorosulfonyl)imide de césium (CsTFSI), de l'hexafluorophosphate de césium (CsPF₆), du fluorure de césium (CsF), de la triméthylboroxine (TMB), du borate de tributyle (TBB), du 2-(2,2,3,3,3-pentafluoropropoxy)-1,3,2-dioxaphospholane (PFPOEPi), du 2-(2,2,3,3,3-pentafluoropropoxy)-4-(trifluorométhyl)-1,3,2-dioxaphospholane (PFPOEPi-1CF₃), de l'hexafluorophosphate de lithium (LiPF₆), du nitrate d'argent (AgNO₃), de l'hexafluorophosphate d'argent (AgPF₆), de la tris(triméthylsilyl)phosphine (TMSP), du 1,6-divinylperfluorohexane et leurs mélanges.

14. Batterie lithium métal comprenant
- une électrode négative comprenant du lithium métal ;
- une électrode positive ;
- un séparateur ; et
- une composition d'électrolyte selon l'une quelconque des revendications 1 à 13.

15. Batterie lithium métal selon la revendication 14, dans laquelle le séparateur est un matériau polymérique poreux comprenant au moins un matériau choisi dans le groupe constitué par un polyester tel qu'un poly(téréphtalate d'éthylène) et un poly(téréphtalate de butylène), un poly(sulfure de phénylène), un polyacétal, un polyamide, un polycarbonate, un polyimide, une polyéthersulfone, un poly(oxyde de phénylène), un poly(sulfure de phénylène), un polyéthylène naphtalène, un poly(oxyde d'éthylène), un polyacrylonitrile, une polyoléfine telle qu'un polyéthylène et un polypropylène, ou leurs mélanges, éventuellement revêtu par des nanoparticules inorganiques.
